# EUROPÄISCHE PATENTANMELDUNG

(11) **EP 4 494 938 A1**
(43) Veröffentlichungstag der Anmeldung: **22.01.2025**
(21) Anmeldenummer: 24165368.2
(22) Anmeldetag: 09.04.2024
(51) Int. Cl.: B60P 1/04, B60P 1/28, B60R 19/56

(54) **UNTERFAHRSCHUTZVORRICHTUNG FÜR EIN NUTZFAHRZEUG MIT EINEM KIPPBAREN LADUNGSBEHÄLTER ODER EINER KIPPBAREN EINHEIT MIT LADUNGSBEHÄLTER**

(30) Priorität: 23.05.2023 DE 202023102831 U
(71) Anmelder: Feldbinder Spezialfahrzeugwerke GmbH, 21423 Winsen/Luhe (DE)
(72) Erfinder: KLEY, Wolf-Dietrich, 21423 Winsen/Luhe (DE)
(74) Vertreter: RGTH

(57) **Zusammenfassung**

Um eine Unterfahrschutzvorrichtung (10) für ein Nutzfahrzeug mit einem kippbaren Ladungsbehälter (11) oder einer kippbaren Einheit mit Ladungsbehälter (11), wobei die Unterfahrschutzvorrichtung (10) ein kippbares Schutzelement (15) gegen ein Unterfahren des Nutzfahrzeugs aufweist, derart zu verbessern, dass sichergestellt ist, dass ein Schutzelement der Unterfahrschutzvorrichtung gegen Beschädigung gesichert ist, wobei gleichzeitig gewährleistet ist, dass dieses stets in die gesetzlich vorgeschriebene Schutzposition zurückgeführt wird, wird vorgeschlagen, dass das Schutzelement (15) um dieselbe Kippachse (32) kippbar ist wie der Ladungsbehälter (11) oder die kippbare Einheit.

## Beschreibung

Die vorliegende Erfindung betrifft eine Unterfahrschutzvorrichtung für ein Nutzfahrzeug mit einem kippbaren Ladungsbehälter oder einer kippbaren Einheit mit Ladungsbehälter sowie ein Nutzfahrzeug umfassend eine Unterfahrschutzvorrichtung nach den unabhängigen Ansprüchen.

### Stand der Technik

Unterfahrschutzvorrichtungen sind grundsätzlich aus dem Stand der Technik bekannt. Diese sind in vielen Ländern, beispielsweise EU-weit, gefordert (in Deutschland beispielsweise nach Paragraph 32b Straßenverkehrs-Zulassungs-Ordnung StVZO). Entsprechende Unterfahrschutzvorrichtungen stören jedoch beim Entladen eines verkippbaren Ladungsbehälters und sollten daher zum Entladen beiseite bewegt werden können um den Entladebereich hinter dem kippbaren Landungsbehälters zu räumen. Allerdings ist bei den aus dem Stand der Technik bekannten Unterfahrschutzvorrichtungen nicht gewährleistet, dass sich das Schutzelement selbständig in die richtige Position bewegt, sprich zwischen einer Schutzposition, einer Entladeposition und einer Aufsetzposition wechselt.

### Darstellung der Erfindung: Aufgabe, Lösung, Vorteile

Der vorliegenden Erfindung liegt somit die Aufgabe zugrunde, eine Unterfahrschutzvorrichtung derart zu verbessern, dass sichergestellt ist, dass ein Schutzelement der Unterfahrschutzvorrichtung gegen Beschädigung gesichert ist, wobei gleichzeitig gewährleistet ist, dass dieses stets in die gesetzlich vorgeschriebene Schutzposition zurückgeführt wird.

Gelöst wird die vorgenannte Aufgabe durch eine Unterfahrschutzvorrichtung für ein Nutzfahrzeug mit einem kippbaren Ladungsbehälter, wobei die Unterfahrschutzvorrichtung ein kippbares Schutzelement gegen ein Unterfahren des Nutzfahrzeuges aufweist. Ferner kann das Nutzfahrzeug einer kippbaren Einheit mit einem Ladungsbehälter aufweisen. Unter der Kippeinheit kann ein kippbarer Aufbau verstanden werden, der bspw. Führungselemente für den Ladungsbehälter aufweisen kann.

Dabei ist das Schutzelement um dieselbe Kippachse kippbar wie der Ladungsbehälter bzw. die kippbare Einheit. Unter dem Begriff "kippbar" ist vor allem drehbar oder schwenkbar zu verstehen. Eine Kippbewegung ist somit synonym zu einer Dreh- oder Schwenkbewegung zu verstehen.

Insbesondere ist das Schutzelement ausschließlich um diese Kippachse kippbar. Ferner bevorzugt ist das Schutzelement frei beweglich um die Kippachse angeordnet. Besonders bevorzugt ist das Schutzelement und der Ladungsbehälter bzw. die kippbare Einheit mittels mindestens einem gemeinsamen Kippgelenk kippbar um die Kippachse angeordnet. Insbesondere handelt es sich um ein einziges gemeinsames Drehlager oder mehrere gemeinsame Drehlager, die dann koaxial in einer Querrichtung des Ladungsbehälters verlaufen. Bei dem Drehlager kann es sich vorzugsweise um ein Gleit-, Wälz-, Kugel- oder Zylinderrollenlager handeln.

Hierbei ist koaxial zumindest als annähernd koaxial zu verstehen, da sich auch bei parallelen Achsen mit geringem Abstand die gleichen Effekte ergeben, sodass die Drehlager koaxial oder annähernd koaxial, also parallel mit geringem Abstand, angeordnet sein müssen.

Das Schutzelement ist vor allem zwischen einer Schutzposition und einer Entladeposition verkippbar. Ferner kann das Schutzelement in eine Aufsetzposition verkippbar sein, insbesondere dann, wenn das Schutzelement auf einem Fahruntergrund aufsetzt. Der Ladungsbehälter bzw. die kippbare Einheit ist zwischen einer Fahrtposition und einer Entladeposition verkippbar. Unter dem Begriff "Fahrtposition" des Ladungsbehälters bzw. der kippbaren Einheit ist insbesondere eine Position zu verstehen, in welcher eine Ladung ausreichend gesichert beziehungsweise sicherbar ist, um mit zulässiger Geschwindigkeit eine Fahrt anzutreten. Bspw. kann der Ladungsbehälter bzw. die kippbare Einheit in die waagerechte Position gebracht. Unter dem Begriff "Position" wird insbesondere eine Stellung verstanden.

Unter dem Begriff "Entladeposition" des Ladungsbehälters bzw. der kippbaren Einheit ist eine Position zu verstehen, in welcher Ladung leicht entnehmbar ist oder sich selbst entlädt. Beispielsweise kann der Ladungsbehälter auf bis zu 50° oder mehr geneigt sein.

Unter dem Begriff "Schutzposition" des Schutzelementes ist zu verstehen, dass das Schutzelement derart angeordnet ist, dass es ein Unterfahren des Nutzfahrzeuges unterbinden kann. Dies die gesetzliche vorgeschriebene Position für eine Fahrt des Nutzfahrzeuges und somit in anderen Worten die Schutzposition des Schutzelementes.

Bei einer Entladung des Ladungsbehälters bzw. der kippbaren Einheit (in anderen Worten, wenn der Ladungsbehälter bzw. die kippbare Einheit in eine Entladeposition gebracht ist) ist das Schutzelement allerdings störend und ist demnach in eine Entladeposition verkippbar. Dabei ist das Schutzelement derart weggeklappt, insbesondere nach unten in Richtung Fahruntergrund, dass dieses der Entladung des Ladungsbehälters bzw. der kippbaren Einheit nicht im Wege steht. Unter dem Begriff "Entladeposition" ist somit eine Position des Schutzelementes zu verstehen, in der das Schutzelement nach unten gekippt ist.

Die Unterfahrschutzvorrichtung ist derart ausgebildet, dass der Ladungsbehälter bzw. die kippbare Einheit um die Kippachse von einer Fahrtposition in eine Entladeposition und zurück verkippbar ist, während das Schutzelement um dieselbe Kippachse von einer Schutzposition in eine Entladeposition und zurück verkippbar ist. Ferner ist das Schutzelement um die Kippachse in eine Aufsetzposition verkippbar.

Unter dem Begriff "Aufsetzposition" ist eine Position des Schutzelementes zu verstehen, in der dieses der Kollision, in anderen Worten den auftretenden Kräften, beim Aufsetzen des Schutzelementes auf einem Fahruntergrund, insbesondere beim Aufsetzen auf einer Erhöhung des Fahruntergrundes, wie bspw. einer Rampe, ausweichen kann, um größere Schäden des Schutzelementes zu vermeiden.

Bewegt sich das Schutzelement in die Aufsetzposition, bewegt es sich vorzugsweise um die Kippachse nach oben ausgehend vom Fahruntergrund. Durch Vorsehen der Aufsetzposition können Beschädigungen des Schutzelementes durch ein versehentliches Aufsetzen wesentlich reduziert werden. Wenn überhaupt sind lediglich Teilschäden zu erwarten, wie beispielsweise Kratzer. Beim Stand der Technik hingegen wird bei einem entsprechenden Aufsetzen das Schutzelement grundlegend beschädigt, sodass ein Austausch meist unvermeidbar ist.

Aufgrund der freien Verschwenkbarkeit des Schutzelement kann dieses leicht ausweichen und kann bei einem Bodenkontakt bis auf mögliche Kratzspuren im Wesentlichen unbeschädigt bleiben.

Befindet sich der Ladungsbehälter bzw. die kippbare Einheit in der Fahrtposition, befindet sich vorzugsweise das Schutzelement in der Schutzposition. Befindet sich der Ladungsbehälter bzw. die kippbare Einheit in einer Entladeposition, befindet sich vorzugsweise auch das Schutzelement in der entsprechenden Entladeposition.

Das Schutzelement umfasst insbesondere ein Querelement, vorzugsweise eine Querstange, die parallel zu dem Fahruntergrund und quer zur Fahrtrichtung des Nutzfahrzeuges angeordnet ist. Das Schutzelement ist zur Kraftaufnahme in Vorwärtsrichtung des Nutzfahrzeuges eingerichtet, sodass ein auffahrendes Kraftfahrzeug, insbesondere ein Personenkraftwagen, mit seiner für einen Auffahrunfall eingerichteten Knautschzone gegen das Schutzelement prallt, sodass dort zum Schutz der Insassen des auffahrenden Kraftfahrzeuges die Bewegungsenergie in Verformungsenergie umgewandelt wird. Dafür kann das Schutzelement beispielsweise ein geformtes Blechelement, mindestens eine Dämpferstange und/oder andere gesetzlich geforderte Elemente, umfassen.

Wie oben bereits beschrieben umfasst die Unterfahrschutzvorrichtung an der Kippachse vorzugsweise ein Kippgelenk. Unter dem Begriff "Kippgelenk" ist insbesondere eine gelenkige Verbindung zu verstehen, sodass der Ladungsbehälter bzw. die kippbare Einheit und das Schutzelement um die Kippachse verkippbar sind. Dabei sind das Kippgelenk und das Schutzelement nicht mittels eines Koppelgetriebes miteinander bewegungszwingend verbunden. Die Bewegung des Ladungsbehälters bzw. der kippbaren Einheit um die Kippachse mittels des Kippgelenkes führt somit nicht automatisch zu einer Bewegung des Schutzelementes, sondern die Schwerkraft des Schutzelementes führt dazu, dass das Schutzelement mitkippt.

Insbesondere sind die Kipp- bzw. Schwenkbewegungen um die Kippachse rein rotatorisch. Unter dem Begriff "rein rotatorische Bewegung" entweder des Ladungsbehälters bzw. der kippbaren Einheit oder des Schutzelementes ist insbesondere eine Rotation beziehungsweise eine Verkippung oder Schwenkbewegung um die Kippachse zu verstehen, die insbesondere keine weiteren translatorischen Bewegungsanteile aufweist.

Das Schutzelement kann insbesondere mittels mindestens eines Anbindungselementes am Ladungsbehälter bzw. an der kippbaren Einheit befestigt sein. Dabei umschließt das Anbindungselement insbesondere das gemeinsame Kippgelenk. Das Anbindungselement kann insbesondere ein Rohrstück umfassen, in das das Kippgelenk eingebracht ist. Das Rohrstück kann unterschiedliche Lagerflächen, eins für ein Schutzelement und eins für das Drehlager umfassen. Beispielsweise kann die äußere Fläche des Rohrstückes als Lagerfläche für das Schutzelement und die innere Fläche als Lagerfläche für ein Drehlager ausgebildet sein, das in das Rohrstück eingebracht ist.

Ferner kann das Anbindungsstück eine Platte umfassen, die zur Anbindungan den Ladungsbehälter bzw. der kippbaren Einheit dient. Zwischen der Platte und dem Rohrstück kann ein Verbindungsstück ausgebildet sein, das sich insbesondere stegförmig erstreckt und sich weiter bevorzugt keilförmig von der Platte in Richtung des Rohrstückes verjüngt. Insbesondere kann das Schutzelement mit mindestens einem Anbindungselement, bspw. genau einem Anbindungselement oder genau zwei Anbindungselementen, am Ladungsbehälter bzw. am kippbaren Einheit befestigt sein. Dabei kann jedes Anbindungselement ein Kippgelenk umschließen.

Insbesondere weist das Schutzelement einen ersten Endbereich auf, wobei sich die Kippachse durch den ersten Endbereich erstreckt. Insbesondere umfasst das Schutzelement einen ersten Endbereich und einen zweiten Endbereich, wobei vorzugsweise dazwischen ein mittlerer Bereich angeordnet ist. Dabei ist der erste Endbereich des Schutzelementes in Schutzposition und vorzugsweise ebenfalls in Aufsetzposition in Vorwärtsrichtung vor dem zweiten Endbereich angeordnet.

Das Schutzelement ist somit im ersten Endbereich kippbar angeordnet. Insbesondere weist das Schutzelement im ersten Endbereich mindestens eine erstes Anlagefläche auf, wobei eine Schwenkbewegung des Schutzelementes um die Kippachse in eine erste Richtung mittels der ersten Anlagefläche begrenzt ist. Insbesondere ist die Bewegung in erster Richtung insofern mittels der ersten Anlagefläche begrenzt, dass diese sich nach einer maximalen Schwenkbewegung in erster Richtung an einer gegenüberliegenden Anlagefläche, vorzugsweise des Anbindungselementes oder des Ladungsbehälters bzw. der kippbaren Einheit, anliegt und somit eine weitere Verkippung verhindert. Eine Schwenkbewegung in erster Richtung bedeutet vor allem, dass sich der zweite Endbereich in Richtung der Fahrbahnoberfläche bewegt. Durch die erste Anlagefläche ist somit sichergestellt, dass in Schutzposition der zweite Endbereich nicht auf der Fahrbahnoberfläche aufliegt.

In Fahrtposition des Ladungsbehälters bzw. der kippbaren Einheit und somit in Schutzposition des Schutzelementes ist die mindestens eine erste Anlagefläche gegen eine gegenüberliegende Anlagefläche am Ladungsbehälter bzw. der kippbaren Einheit oder am Anbindungselement gedrückt. Vorzugsweise sorgt die Schwerkraft des zweiten Endbereiches dafür, dass sich das Schutzelement so lange um die Kippachse verschwenkt, bis die erste Anlagefläche anliegt.

Ferner weist das Schutzelement vorzugsweise eine zweite Anlagefläche auf, ebenfalls im ersten Endbereich, wobei eine Schwenkbewegung des Schutzelementes um die Kippachse in eine zweite Richtung, die der ersten vorzugsweise entgegengerichtet ist, mittels der zweiten Anlagefläche begrenzt ist. Eine Schwenkbewegung in der zweiten Richtung kann vor allem durch eine Aufsetzsituation entstehen. Das Schutzelement setzt auf einem unebenen Fahruntergrund auf, sodass das Schutzelement nach oben ausweichen muss. Dafür führt es eine rotatorische Bewegung um die zweite Kippachse in der zweiten Richtung aus, die allerdings nur bis zu einem Anliegen der zweiten Anlagefläche an einer gegenüberliegenden Anlagefläche am Ladungsbehälter bzw. an der kippbaren Einheit oder am Anbindungselement gedrückt wird. Und zwar führt das Schutzelement bei einem Aufsetzen des Schutzelementes eine Schwenkbewegung um die Kippachse in die zweite Richtung durch, die mittels der zweiten Anlagefläche begrenzt ist. Erst bei einer Überschreitung dieser maximalen Schwenkbewegung wird das Schutzelement beschädigt. Durch das Vorsehen der zweiten Anlagefläche kommt es zu einer definierten Kollision und somit zu einem bewusst begrenzten Schaden.

Ferner bevorzugt ist eine Schwenkbewegung des Schutzelementes in die erste Richtung bei einer Verkippung des Ladungsbehälters bzw. der kippbaren Einheit durch mindestens einen Anschlag an einem Chassis des Nutzfahrzeuges begrenzt. Der Anschlag setzt insbesondere an dem mittleren Bereich des Schutzelementes an und begrenzt somit die Schwenkbewegung des Schutzelementes. Der Anschlag definiert eine maximale Schwenkbewegung des Schutzelementes bei einer Bewegung des Ladungsbehälters bzw. der kippbaren Einheit. Der Anschlag und/oder das mindestens eine Anbindungselement sind vorzugsweise Teil der Unterfahrschutzvorrichtung.

Vorzugsweise stehen die erste Anlagefläche und die zweite Anlagefläche in einem Winkel zueinander, der vorzugsweise höchstens 160°, am meisten bevorzugt höchstens 150°, beträgt. Ferner beträgt der Winkel mindestens 110°, am meisten bevorzugt mindestens 130°. Dabei ist die erste Anlagefläche in Fahrtrichtung des Nutzfahrzeuges und somit in Längsrichtung des Schutzelementes und des Ladungsbehälters bzw. der kippbaren Einheit vor der zweiten Anlagefläche angeordnet. Die erste Anlagefläche und die zweite Anlagefläche sind vorzugsweise direkt benachbart angeordnet.

Bei einer Verkippung des Ladungsbehälters bzw. der kippbaren Einheit ist in der anfänglichen Schutzposition ist die erste Anlagefläche anliegend an einer gegenüberliegenden Anlagefläche. Nun schwenkt das Schutzelement in der anfänglichen Schutzposition mit einer Schwenkbewegung des Ladungsbehälters bzw. der kippbaren Einheit, um den Entladebereich hinter dem kippbaren Landungsbehälters bzw. der kippbaren Einheit zu räumen, wobei zunächst die erste Anlagefläche an einer gegenüberliegenden Anlagefläche anliegend bleibt. Dies liegt daran, dass bei einer Schwenkbewegung des Ladungsbehälters bzw. der kippbaren Einheit auch das Anbindungselement und somit die Anlagefläche, an der die erste Anlagefläche des Schutzelementes anliegt, verkippt. Das Schutzelement bewegt sich somit bei dem Mitschwenken nicht relativ zum Anbindungselement.

Erst wenn - bei einer weiteren Verkippung des Ladungsbehälters bzw. der kippbaren Einheit und der Entladebereich hinter dem kippbaren Landungsbehälter geräumt ist - das Schutzelement nicht weiter in erster Richtung verkippen kann, da es am Anschlag des Chassis anliegt, schwenkt das Anbindungselement relativ zum Schutzelement. Während das Schutzelement somit in absoluter Position in einer unveränderten Position verbleibt, ändert sich die relative Position zum Anbindungselement dadurch, dass das Anbindungselement - zusammen mit dem Ladungsbehälter bzw. der kippbaren Einheit - weiter verkippt, bis der benötigte Kippwinkel des Ladungsbehälters bzw. der kippbaren Einheit für die Entladung erreicht ist. Durch die gewinkelte Anordnung der ersten Anlagefläche und der zweiten Anlagefläche ist ein Freigang geschaffen, welcher diese weitere Verschwenkung des Ladungsbehälters bzw. der kippbaren Einheit ermöglicht. Durch diesen Freigang und die freie Verschwenkbarkeit des Schutzelements kann dieser bei Bodenkontakt des Querelements ungehindert ausweichen um größere Schäden des Schutzelementes bzw. der Unterfahrschutzvorrichtung zu vermeiden.

Durch die freie Bewegungsmöglichkeit des Schutzelementes und die Anlagemöglichkeiten an der ersten Anlagefläche wird ermöglicht, dass sich das Schutzelement in einer von der Schutzposition abweichenden Position befindet, wobei jedoch stets sichergestellt ist, dass sich das Schutzelement bei einer Fahrt stets in der Schutzposition befindet, da die Schwerkraft stets dafür sorgt, dass sich das Schutzelement in der Schutzposition befindet, außer es findet ein Aufsetzen statt. Ferner wird eine automatische Mitbewegung des Schutzelementes basierend auf einer Bewegung des Ladungsbehälters bzw. der kippbaren Einheit sichergestellt, wodurch keine Betätigung des Schutzelementes durch den Fahrer des Nutzfahrzeuges vor einer Bewegung des Ladungsbehälters bzw. der kippbaren Einheit zur Entladung notwendig ist.

Insbesondere ist eine Schwenkbewegung des Schutzelementes durch mindestens ein Dämpferelement, insbesondere ein Federdämpferelement, gedämpft, wobei ein erstes Ende des Dämpferelementes am Schutzelement und ein zweites Ende des Dämpferelementes am Ladungsbehälter bzw. an der kippbaren Einheit befestigt ist. Das Dämpferelement sorgt somit für eine gedämpfte Bewegung, sodass durch plötzliche Bewegung des Schutzelementes kein Schaden entsteht. Das Dämpferelement ist vorzugsweise in Fahrtrichtung des Nutzfahrzeuges und somit in Längsrichtung des Schutzelementes und des Ladungsbehälters bzw. der kippbaren Einheit vor der ersten Anlagefläche angeordnet. Das Dämpfungselement kann dafür sorgen, dass das Schutzelement nicht nur durch seine Schwerkraft in seiner Schutzposition gehalten wird, sondern das Dämpferelement kann einen entsprechenden Zug ausüben kann, sodass bei Stößen oder Unebenheiten unbeabsichtigte Bewegungen oder mögliche Schäden vermieden werden.

Das Schutzelement kann insbesondere mehrere Arme aufweisen, die vorzugsweise jeweils einen ersten Endbereich und einen zweiten Endbereich aufweisen, und vorzugsweise einen mittleren Bereich. Die Arme sind vorzugsweise formgleich und parallel zueinander angeordnet. Alle oben genannten Merkmale bezüglich der Anlagefläche können sich auf sämtliche Arme erstrecken. Dabei können insbesondere jeweils zwei Arme des Schutzelementes mittels eines Anbindungselementes am Ladungsbehälter bzw. an der kippbaren Einheit befestigt sein. Insbesondere umschließen die jeweiligen Arme das Verbindungsstück des Anbindungselementes.

Insbesondere kann mindestens ein Arm eines solches Paares einen Vorsprung aufweisen, an dem das zweite Ende eines Dämpferelementes befestigt ist. Jedes Paar ist vorzugsweise genau ein Dämpferelement zugeordnet. Ferner kann jedem Arm ein Anschlag am Chassis zugordnet sein.

Insbesondere umfasst jeder Arm jeweils eine erste Anlagefläche und eine zweite Anlagefläche, die beide an einer gegenüberliegenden Anlagefläche der Platte des Anbindungselementes anliegen können. Die Platte weist somit eine Breite auf, die mindestens die Breite des Verbindungsstückes und der beiden Arme umfasst. Insbesondere umfasst das Schutzelement jeweils zwei Paare solcher Arme und somit umfasst die Unterfahrschutzvorrichtung zwei Anbindungselemente. In jedem Rohrstück der Anbindungselemente ist ein jeweiliges Kippgelenk angeordnet, die koaxial zueinander angeordnet sind.

In einem weiteren Aspekt betrifft die vorliegende Erfindung ein Nutzfahrzeug mit einem kippbaren Ladungsbehälter oder einer kippbaren Einheit mit einem Ladungsbehälter umfassend eine Unterfahrschutzvorrichtung, wie sie bevorzugterweise oben beschrieben ist. Dabei ist die Unterfahrschutzvorrichtung insbesondere am Heck des Nutzfahrzeuges angeordnet. Frontseitig befindet sich insbesondere ein Fahrerhaus, während sich heckseitig der kippbare Ladungsbehälter bzw. die kippbare Einheit befindet, wobei die Vorwärtsrichtung von dem Ladungsbehälter zu dem Fahrerhaus weist.

### Kurze Beschreibung der Figuren

Es zeigen in rein schematischer Darstellung:
- Figur 1:: ein Anbindungselement zum Befestigen eines Schutzelementes einer Unterfahrschutzvorrichtung;
- Figur 2:: eine Unterfahrschutzvorrichtung umfassend ein mittels eines Anbindungselementes nach Figur 1 befestigten Schutzelementes;
- Figur 3:: die Unterfahrschutzvorrichtung gemäß der Figur 2 in Seitendarstellung bei einer Fahrtposition des Ladungsbehälters;
- Figur 4:: die Unterfahrschutzvorrichtung der Figuren 2 und 3 in Seitendarstellung bei einer um 30° geschwenkten Position des Ladungsbehälters;
- Figur 5:: die Unterfahrschutzvorrichtung der Figuren 2 bis 4 in Seitendarstellung bei einer um 45° geschwenkten Position des Ladungsbehälters;
- Figur 6:: die Unterfahrschutzvorrichtung der vorherigen Figuren in Seitendarstellung bei einem Kontakt des Schutzelements mit einem unebenen Fahrgrund; und
- Figur 7:: eine untere Ansicht der Unterfahrschutzvorrichtung der vorherigen Figuren bei einer Position des Ladungsbehälters nach Figur 4.

### Bevorzugte Ausführungsformen

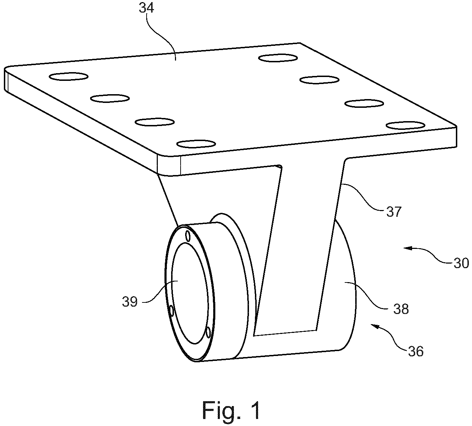

In Figur 1 ist ein Anbindungselement 30 zum Befestigen eines Schutzelementes 15 einer Unterfahrschutzvorrichtung 10 an einem Ladungsbehälter 11 eines Nutzfahrzeuges dargestellt.

Das Anbindungselement 30 weist eine Platte 34 auf, mit dem es an einem Ladungsbehälter 11, insbesondere an dessen Unterseite 12, befestigt werden kann. Ferner weist das Anbindungselement 30 ein Rohrstück 36 auf, sowie ein stegförmiges Verbindungsstück 37. Das Verbindungsstück 37 verjüngt sich vorzugsweise von der Platte 34 in Richtung Rohrstück 36. Der Durchmesser des Rohrstücks 36 ist kleiner als die Länge der Platte 34. An dem Rohrstück 36 sind mehrere Lagerflächen ausgebildet, und zwar eine äußere Lagerfläche 38 für das Schutzelement 15 und eine innere Lagerfläche 39 für ein Drehlager 31.

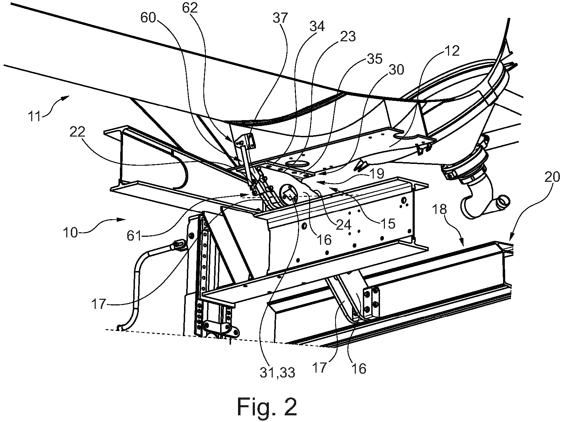

In Figur 2 ist eine Unterfahrschutzvorrichtung 10 gezeigt, die ein Schutzelement 15 aufweist, das mittels zweier in Figur 1 gezeigten Anbindungselemente 30 an der Unterseite 12 des Ladungsbehälters 11 befestigt ist.

In Figur 2 ist ein erster Arm 16 und ein zweiter Arm 17 des Schutzelements 15 zu sehen, die das Verbindungsstück 37 des Anbindungselementes 30 umschließen. So liegen die Arme an der äußeren Lagerfläche 38 an. Durch das Rohrstück 36 ist ein Drehlager 31 ausgebildet und somit eine Kippachse 32, um die sowohl das Schutzelement 15 als auch der Ladungsbehälter 11 schwenken kann. In anderen Worten ist ein Kippgelenk 33 ausgebildet.

Ferner weist das Schutzelement 15 ein Querelement 18 auf, und zwar an dessen zweiten Endbereich 20. Im ersten Endbereich 19 ist die Kippachse 32 und die Anbindung an das Anbindungselement 30 angeordnet. Dazwischen erstreckt sich ein mittlerer Bereich 21, der in Figur 2 größtenteils verdeckt ist, und in dem der erste Arm 16 und der zweite Arm 17 vorzugsweise geradlinig verlaufen.

Im ersten Endbereich 19 erstreckt sich ein Vorsprung 22. Insbesondere ist der Vorsprung 22 als sich verjüngender plattenförmiger Steg ausgebildet. Von dem Vorsprung 22 erstreckt sich ein Dämpferelement 60. Ein erstes Ende 61 des Dämpferelementes ist am Vorsprung 22 angeordnet, während ein zweites Ende 62 an der Unterseite 12 des Ladungsbehälters 11 angeordnet ist. Das Dämpferelement 60 sorgt für eine gedämpfte Schwenkbewegung des Schutzelements 15, das grundsätzlich frei schwenkbar um die Kippachse 32 angeordnet ist.

Das Schutzelement 15 weist pro Arm eine erste Anlagefläche 23 und eine zweite Anlagefläche 24 auf. Das Anbindungselement 30 weist an dessen Platte 34 eine Anlagefläche 35 auf, die den Anlageflächen des Schutzelements 15 gegenüberliegt.

In Figur 2 ist die Unterfahrschutzvorrichtung 10 gezeigt, wobei sich der Ladungsbehälter in der Fahrtposition befindet und somit nicht verschwenkt ist. Aufgrund der auf den zweiten Endbereiches 20 des Schutzelementes 15 wirkenden Schwerkraft drückt die erste Anlagefläche 23 gegen die entsprechend gegenüberliegende Anlagefläche 35 des Anbindungselementes 30 und begrenzt somit eine Schwenkbewegung des Schutzelementes 15 in eine erste Richtung 70.

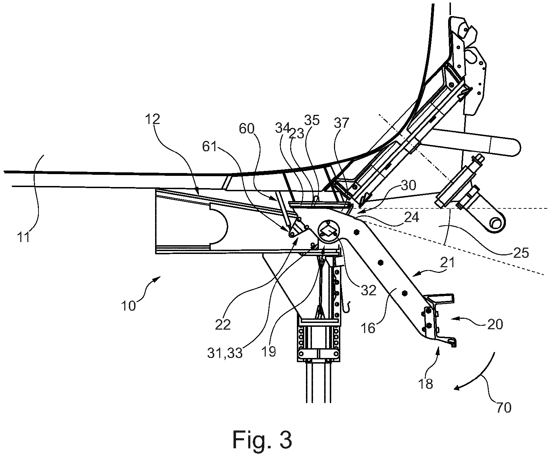

In Figur 3 ist die Unterfahrschutzvorrichtung 10 gemäß der Figur 2 in Seitendarstellung gezeigt. Die erste Richtung 70 erstreckt sich in Figur 3 in Uhrzeigerrichtung. Deutlich ist zu sehen, wie das Schutzelement 15 als auch der Ladungsbehälter 11 um die gemeinsame Kippachse 32 verschwenkbar sind. Eine Verschwenkung des Schutzelements 15 in erster Richtung 70 ist insofern begrenzt, als dass die erste Anlagefläche 23 gegen die Anlagefläche 35 des Anbindungsstückes 30 stößt.

Deutlich ist in Figur 3 auch der mittlere Bereich 21 zwischen dem ersten Endbereich 19 und dem zweiten Bereich 20 zu sehen, in dem sich die Arme des Unterfahrschutzes geradlinig erstrecken. Die erste Anlagefläche 23 und die zweite Anlagefläche 24 erstrecken sich jeweils im Wesentlichen plan, wobei diese einen Winkel 25 einschließen.

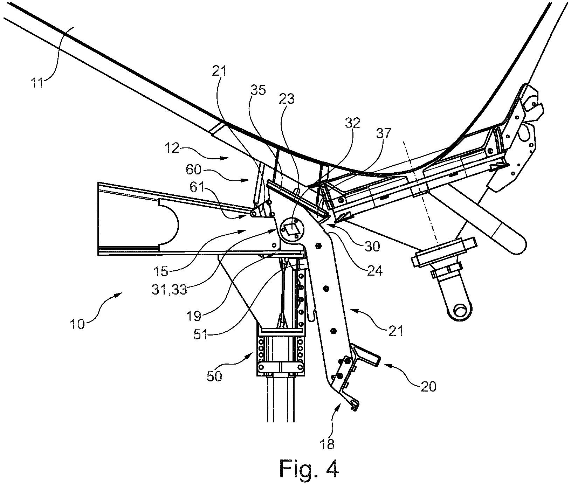

In Figur 4 ist die Unterfahrschutzvorrichtung 10 der Figuren 2 und 3 in einer um 30° geschwenkten Position des Ladungsbehälters 11 zu sehen. Das Schutzelement 15 schwenkt ebenfalls mit, bis es allerdings an einem Anschlag 51 des Chassis 50 des Nutzfahrzeuges anschlägt. An dem Anschlag 51 schlagen die Arme im mittleren Bereich 21 an.

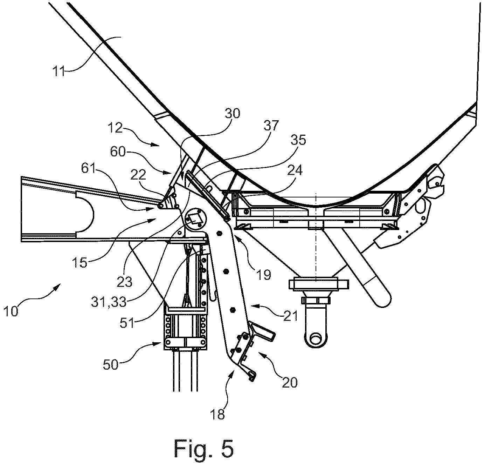

Figur 5 zeigt die Unterfahrschutzvorrichtung 10 der vorherigen Figuren in einer Kippposition von 45° des Ladungsbehälters 11. Deutlich ist in Figur 5 zu sehen, wie bei einer weiteren Verkippung des Ladungsbehälters 11 durch den Freigang, der durch den Winkel 25 zwischen der ersten Anlagefläche 23 und der zweiten Anlagefläche 24 entsteht, das Schutzelement 15 nun nicht mehr an der ersten Anlagefläche anliegt, sondern an dem Anschlag 51. Dies ist dadurch gewährleistet, dass der Ladungsbehälter 11 um die gleiche gemeinsame Kippachse 32 verkippbar ist.

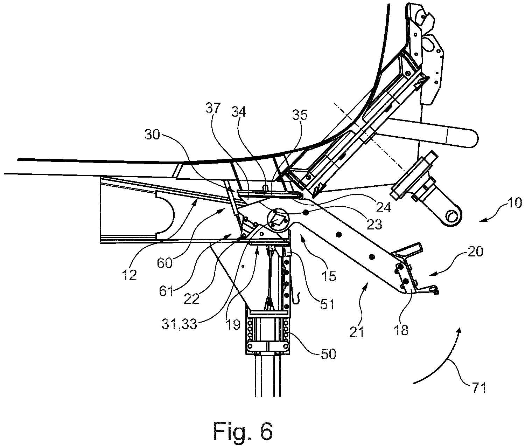

In Figur 6 ist die Unterfahrschutzvorrichtung 10 der vorherigen Figuren gezeigt bei einem Kontakt des Schutzelements 15 mit einem unebenen Fahrgrund, bei der der zweite Endbereich 20 des Schutzelements 15 nach oben gedrückt wird. Dabei findet eine Schwenkbewegung des Schutzelementes 15 in eine zweite Richtung 71, und zwar entgegen dem Uhrzeigersinn um die Kippachse 32 statt, und zwar maximal bis die zweite Anlagefläche 24 an der Anlagefläche 35 des Anbindungsstückes 30 anliegt. Der maximale Freigang wird somit durch den Winkel 25 definiert.

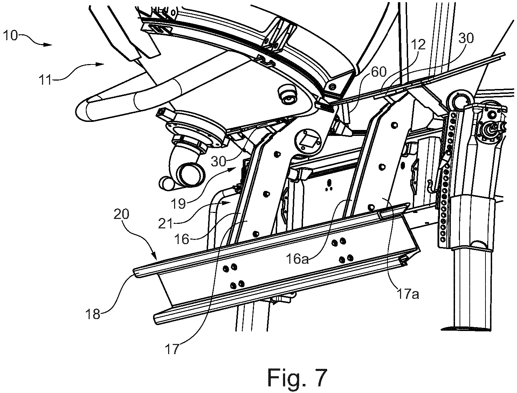

In Figur 7 ist eine untere Ansicht der Unterfahrschutzvorrichtung 10 in einer Position des Ladungsbehälters 11 und des Schutzelements 15 der Figur 4 gezeigt. Deutlich sind die insgesamt vier Arme der Unterfahrschutzvorrichtung sowie die beiden Anbindungselemente 30 zu sehen, und zwar der erste Arm 16, der zweite Arm 17, der dritte Arm 16a und der vierte Arm 17a. Die Anbindung jeweils zweier Arme an einem Anbindungselement erfolgt wie zuvor beschrieben. Ferner ist das Querelement 18 im zweiten Endbereich 20 deutlich zu sehen.

### Bezugszeichenliste

- 10: Unterfahrschutzvorrichtung
- 11: Ladungsbehälter
- 12: Unterseite
- 15: Schutzelement
- 16: erster Arm
- 17: zweiter Arm
- 16a: dritter Arm
- 17a: vierter Arm
- 18: Querelement
- 19: erster Endbereich
- 20: zweiter Endbereich
- 21: mittlerer Bereich
- 22: Vorsprung
- 23: erste Anlagefläche
- 24: zweite Anlagefläche
- 25: Winkel
- 30: Anbindungselement
- 31: Drehlager
- 32: Kippachse
- 33: Kippgelenk
- 34: Platte
- 35: Anlagefläche
- 36: Rohrstück
- 37: Verbindungsstück
- 38: äußere Lagerfläche
- 39: innere Lagerfläche
- 50: Chassis
- 51: Anschlag
- 60: Dämpferelement
- 61: erstes Ende
- 62: zweites Ende
- 70: erster Richtung
- 71: zweite Richtung

## Patentansprüche

1. Unterfahrschutzvorrichtung (10) für ein Nutzfahrzeug mit einem kippbaren Ladungsbehälter (11) oder einer kippbaren Einheit mit Ladungsbehälter (11),
wobei die Unterfahrschutzvorrichtung (10) ein kippbares Schutzelement (15) gegen ein Unterfahren des Nutzfahrzeugs aufweist,
**dadurch gekennzeichnet, dass**
das Schutzelement (15) um dieselbe Kippachse (32) kippbar ist wie der Ladungsbehälter (11) oder die kippbare Einheit.

2. Unterfahrschutzvorrichtung (10) nach Anspruch 1,
**dadurch gekennzeichnet, dass**
das Schutzelement (15) frei beweglich um die Kippachse (32) angeordnet ist.

3. Unterfahrschutzvorrichtung (10) nach Anspruch 1 oder 2,
**dadurch gekennzeichnet, dass**
das Schutzelement (15) und der Ladungsbehälter (11) oder die kippbare Einheit mittels mindestens einem gemeinsamen Kippgelenkes (33) kippbar um die Kippachse (32) angeordnet sind.

4. Unterfahrschutzvorrichtung (10) nach einem der vorangehenden Ansprüche,
**dadurch gekennzeichnet, dass**
das Schutzelement (15) mittels mindestens einem Anbindungselementes (30) am Ladungsbehälter (11) oder an der kippbaren Einheit befestigt ist.

5. Unterfahrschutzvorrichtung (10) nach Anspruch 4,
**dadurch gekennzeichnet, dass**
das Anbindungselement (30) das gemeinsame Kippgelenk (33) umschließt.

6. Unterfahrschutzvorrichtung (10) nach einem der vorangehenden Ansprüche,
**dadurch gekennzeichnet, dass**
das Schutzelement (15) einen ersten Endbereich (19) aufweist,
wobei sich die Kippachse (32) durch den ersten Endbereich (19) erstreckt.

7. Unterfahrschutzvorrichtung (10) nach einem der vorangehenden Ansprüche,
**dadurch gekennzeichnet, dass**
das Schutzelement (15) im ersten Endbereich (19) mindestens eine erste Anlagefläche (23) aufweist,
wobei eine Schwenkbewegung des Schutzelements (15) um die Kippachse (32) in eine erste Richtung (70) mittels der ersten Anlagefläche (23) begrenzt ist.

8. Unterfahrschutzvorrichtung (10) nach Anspruch 7,
**dadurch gekennzeichnet, dass**
in Fahrtposition des Ladungsbehälters (11) bzw. der kippbaren Einheit die mindestens eine erste Anlagefläche (23) gegen eine gegenüberliegende Anlagefläche (35) des Ladungsbehälter (11) bzw. der kippbaren Einheit oder des Anbindungselements (30) gedrückt ist.

9. Unterfahrschutzvorrichtung (10) nach einem der vorangehenden Ansprüche,
**dadurch gekennzeichnet, dass**
das Schutzelement (15) im ersten Endbereich (19) eine zweite Anlagefläche (24) aufweist,
wobei eine Schwenkbewegung des Schutzelements (15) um die Kippachse (32) in eine zweite Richtung (71) mittels der zweiten Anlagefläche (24) begrenzt ist.

10. Unterfahrschutzvorrichtung (10) nach Anspruch 9,
**dadurch gekennzeichnet, dass**
bei einem Aufsetzen des Schutzelementes (15) auf einem Fahruntergrund eine Schwenkbewegung des Schutzelements (15) um die Kippachse (32) in die zweite Richtung (71) mittels der zweiten Anlagefläche (24) begrenzt ist.

11. Unterfahrschutzvorrichtung (10) nach einem der Ansprüche 7 bis 10, **dadurch gekennzeichnet, dass**
die erste Anlagefläche (23) und die zweite Anlagefläche (24) einen Winkel (25) zwischen 110° und 160° zueinander aufweisen.

12. Unterfahrschutzvorrichtung (10) nach einem der Ansprüche 7 bis 11, **dadurch gekennzeichnet, dass**
eine Schwenkbewegung des Schutzelements (15) in die erste Richtung (70) bei einer Verkippung des Ladungsbehälters (11) bzw. der kippbaren Einheit durch einen Anschlag (51) an einem Chassis (50) des Nutzfahrzeuges begrenzt ist.

13. Unterfahrschutzvorrichtung (10) nach einem der vorangehenden Ansprüche,
**dadurch gekennzeichnet, dass**
eine Schwenkbewegung des Schutzelements (15) durch mindestens ein Dämpferelement (60) gedämpft ist,
wobei ein erstes Ende (61) des Dämpferelements (60) am Schutzelement (15) und ein zweites Ende (62) am Ladungsbehälter (11) bzw. an kippbaren Einheit befestigt ist.

14. Nutzfahrzeug mit einem kippbaren Ladungsbehälter (11) oder einer kippbaren Einheit mit Ladungsbehälter (11) umfassend eine Unterfahrschutzvorrichtung (10) nach einem der Ansprüche 1 bis 13.
